(19) Europäisches Patentamt

European Patent Office

Office européen des brevets

(11) **EP 0 806 039 B1**

(12) **EUROPEAN PATENT SPECIFICATION**

(45) Date of publication and mention
of the grant of the patent:
**15.05.2002  Bulletin 2002/20**

(51) Int Cl.⁷: **G11B 7/18**, G02B 27/09

(21) Application number: **96927929.8**

(86) International application number:
**PCT/KR96/00150**

(22) Date of filing: **28.08.1996**

(87) International publication number:
**WO 97/08691 (06.03.1997 Gazette 1997/11)**

(54) **LENS DEVICE AND AN OPTICAL PICKUP APPARATUS USING THE LENS DEVICE**

LINSEVORRICHTUNG UND OPTISCHES ABTASTGERÄT MIT DIESER LINSEVORRICHTUNG

DISPOSITIF A LENTILLE ET CAPTEUR OPTIQUE METTANT EN OEUVRE CE DISPOSITIF

(84) Designated Contracting States:
**AT DE ES FR GB IT NL PT SE**

(30) Priority: **30.08.1995  KR 9527715**
**25.09.1995  KR 9531679**
**04.10.1995  KR 9533914**
**25.01.1996  KR 9601605**
**14.02.1996  KR 9603605**
**01.05.1996  US 640474**
**01.05.1996  US 640553**

(43) Date of publication of application:
**12.11.1997  Bulletin 1997/46**

(60) Divisional application:
**01203714.9 / 1 195 753**

(73) Proprietor: **Samsung Electronics Co., Ltd.**
**Suwon City, Kyungki-do 442-370 (KR)**

(72) Inventors:
• **LEE, Chul, Woo**
**Seoul 120-193 (KR)**

• **SHIN, Dong, Ho 146-5, Buk Ah-hyun 3-dong**
**Seoul 120-193 (KR)**
• **RIM, Kyung, Hwa**
**Kyungki-do 442-370 (KR)**
• **CHUNG, Chong, Sam**
**Songpa-gu 138-1600 (KR)**
• **CHO, Kun, Ho 1-1506, Samsung 1-cha Apartment**
**Kyungki-do 443-370 (KR)**
• **SEONG, Pyong, Yong**
**4-808, Moonjung Shiyoung**
**Seoul 138-200 (KR)**
• **YOO, Jang, Hoon 3-708, Woosung Apartment**
**Seoul 150-073 (KR)**
• **LEE, Yong, Hoon 201-1505, Jugong Apartment**
**Kyungki-do 442-190 (KR)**

(74) Representative: **Chugg, David John et al**
**Appleyard Lees,**
**15 Clare Road**
**Halifax, West Yorkshire HX1 2HY (GB)**

(56) References cited:
**EP-A- 0 457 553**     **EP-A- 0 492 844**
**US-A- 4 712 885**     **US-A- 5 148 317**

Note: Within nine months from the publication of the mention of the grant of the European patent, any person may give
notice to the European Patent Office of opposition to the European patent granted. Notice of opposition shall be filed in
a written reasoned statement. It shall not be deemed to have been filed until the opposition fee has been paid. (Art.
99(1) European Patent Convention).

**Description**

Technical Field

The present invention relates to a lens device and method of making same, a method of obtaining a stable focus servo signal, an optical pickup adopting the same, a method of discriminating discs having different thicknesses and a method of reproducing/recording information from/onto the discs.

Background Art

An optical pickup records and reproduces information such as video or audio data onto/from recording media, e.g., discs (or disks). A disc has a structure that an information-recorded surface is formed on a substrate. For example, the substrate can be made of plastic or glass. In order to read or write information from a high-density disc, the diameter of the optical spot must be very small. To this end, the numerical aperture of an objective lens is generally made large and a light source having a shorter wavelength is used. However, in case of using the shorter wavelength light source, a tilt allowance of the disc with respect to optical axis is reduced. The thus-reduced disc tilt allowance can be increased by reducing the thickness of the disc.

Assuming that the tilt angle of the disc is θ, the magnitude of a coma aberration coefficient $W_{31}$ can be obtained from:

$$W_{31} = -\frac{d}{2}\left(\frac{n^2(n^2-1)\sin\theta\cos\theta}{(n^2-\sin^2\theta)^{\frac{5}{2}}}\right)NA^3$$

where d and n represent the thickness and refractive index of the disc, respectively. As understood from the above relationship, the coma aberration coefficient is proportional to the cube of the numerical aperture (NA). Therefore, considering that the NA of the objective lens required for a conventional compact disc (CD) is 0.45 and that for a conventional digital video disc or digital versatile disc (DVD) is 0.6 (to accommodate the higher information density), the DVD has a coma aberration coefficient of about 2.34 times that of the CD having the same thickness for a given tilt angle. Thus, the maximum tilt allowance of the DVD is reduced to about half that of the conventional CD. In order to conform the maximum tilt allowante of the DVD to that of the CD, the thickness d of the DVD could be reduced.

However, such a thickness-reduced disc adopting a shorter wavelength (high density) light source, e.g., a DVD, cannot be used in a recording/reproducing apparatus such as a disc drive for the conventional CDs adopting a longer wavelength light source because a disc having a non-standard thickness is influenced by a spherical aberration to a degree corresponding to the difference in disc thickness from that of a normal disc. If the spherical aberration is extremely increased, the spot formed on the disc cannot have the light intensity needed for recording information, which prevents the information from being recorded precisely. Also, during reproduction of the information, the signal-to-noise (S/N) ratio is too low to reproduce the recorded information exactly.

Therefore, an optical pickup adopting a light source having a short wavelength e.g., 650nm, which is compatible for discs having different thicknesses, such as a CD or a DVD, is necessary.

For this purpose, research into apparatuses capable of recording/reproducing information on either of two disc types having different thicknesses with a single optical pickup device and adopting a shorter wavelength light source is under progress. Lens devices adopting a combination of a hologram lens and a refractive lens have been proposed in, for example, Japanese Patent Laid-Open Publication No. Hei 7-98431.

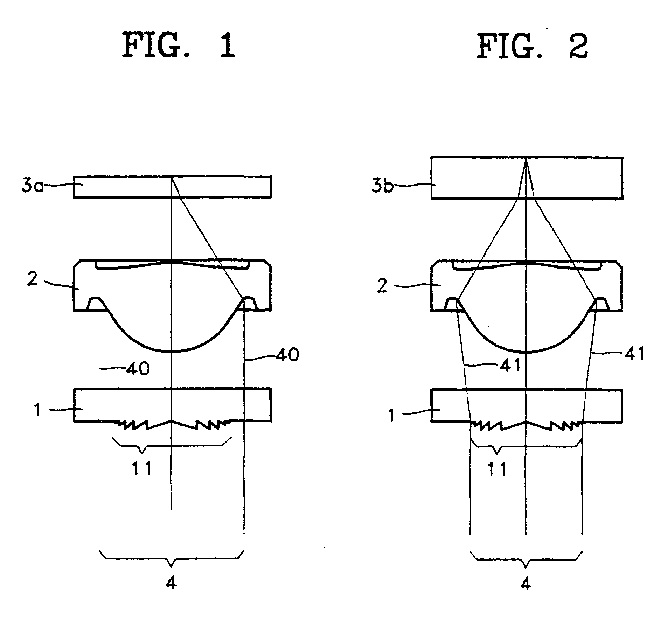

Figures 1 and 2 show the focusing of zero-order and first-order-diffracted light onto discs 3a and 3b having different thicknesses, respectively. In each figure, a hologram lens 1, provided with a pattern 11, and a refractive objective lens 2 are provided along the light path in front of discs 3a and 3b. The pattern 11 diffracts a light beam 4 from a light source (not shown) passing through hologram lens 1, to thereby separate the passing light into first-order-diffracted light 41 and zero-order light 40 each of which is focused to a different point on the optical axis with a different intensity by the objective lens 2. The two different focal points are the appropriate focus points on the thicker disc 3b and the thinner disc 3a, respectively and thus enable data read/write operations with respect to discs having different thicknesses.

However, in using such a lens system, the separation of the light into two beams (i.e., the zero order and first order light) by the hologram lens 1 lowers the utilizing efficiency of the actually used (reflected and partially twice diffracted, 1st order) light to about 15%. Also, during the read operation, since the information is riding on one of the beams while the other beam is carrying no information, the beam that is carrying no information is likely to be detected as noise. Moreover, the fabrication of such a hologram lens requires a high-precision process used in etching a fine hologram pattern, which increases manufacturing costs.

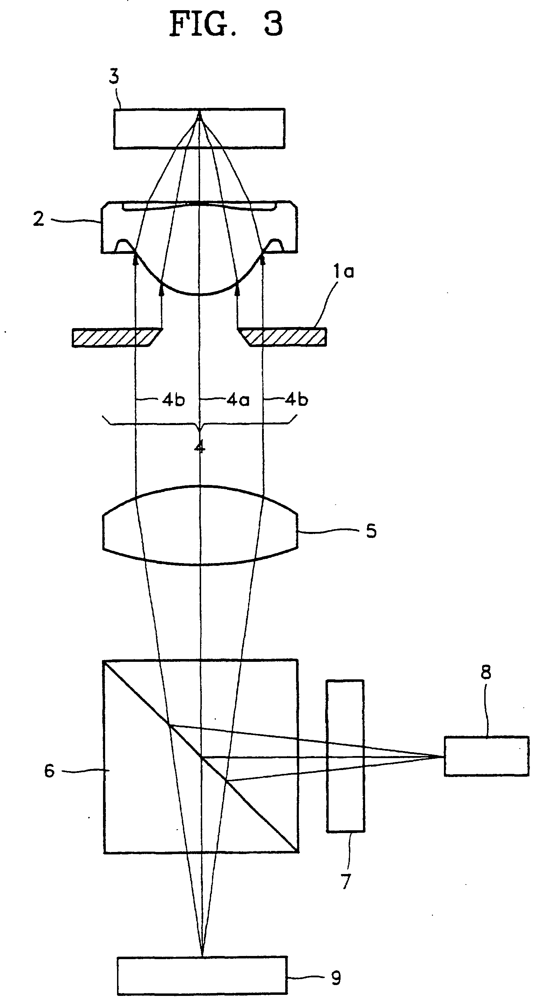

Figure 3 is a schematic diagram of another conventional optical pickup device as disclosed in U.S. Patent No. 5,281, 797. This optical pick-up device includes a variable diaphragm 1a for varying the aperture diameter, so that data can be recorded onto a longer wavelength disc as well as a shorter wavelength disc, but with the discs having the same thickness, and information can be reproduced therefrom. The variable diaphragm 1a is installed between the objective lens 2 and a collimating lens 5. The variable diaphragm 1a controls a beam 4 emitted from a light source 9 and transmitted through a beam splitter 6, by appropriately adjusting the area of the beam passing region, i.e., the numerical aperture (NA). The diametral aperture of the variable diaphragm 1a is adjusted in accordance with the spot size required by the disc to be used and always passes the annular beam 4a of the central region but selectively passes or blocks the beam 4b of the peripheral region. In Figure 3, a reference numeral 7 denotes a focusing lens and a reference numeral 8 denotes a photodetector.

In the optical device having the above configuration, if the variable diaphragm is formed by a mechanical diaphragm, its structural resonance characteristics change depending on the effective aperture of the diaphragm. The installation of the diaphragm onto an actuator for driving the objective lens becomes difficult in practice. To solve this problem liquid crystals may be used for forming the diaphragm. This, however, greatly impedes the miniaturization of the system, deteriorates heat-resistance and endurance and increases manufacturing costs.

Another approach is disclosed in U.S. Patent 5,496,995. As disclosed, a phase plate is placed in a light path of an objective lens. The phase plate creates first and second light sources of different phases such that the amplitudes of the lateral sides of a main lobe of an image of the first light source are cancelled by the amplitude of the main lobe of an image of the second light source by superimposition. In one embodiment, annular opaque rings separate grooves of different depths, the grooves providing the phase difference. A problem inherent to this approach is the need to carefully control the groove depth and light amplitudes, for example, to create the proper phase change and lobe cancellation.

Alternatively, a separate objective lens for each disc may be provided so that a specific objective lens is used for a specific disc. In this case, however, since a driving apparatus is needed for changing lenses, the configuration becomes complex and the manufacturing cost increases accordingly.

Disclosure of the Invention

It is an object of the present invention to provide a lens device which is inexpensive and easily fabricated, a method of obtaining a stable focus servo signal, an optical pickup adopting the same, a method of discriminating discs having different thicknesses and a method for reproducing/recording information from/onto the discs.

It is another object of the present invention to provide an objective lens whose light utilizing efficiency is enhanced and which can form aberration-reduced spots, a method of obtaining a stable focus servo signal, an optical pickup adopting the same and a method for reproducing/recording information from/onto the discs.

According to the invention, there is provided an optical pickup device for reproducing/recording information from/onto an optical disc comprising: a light source; an objective lens provided along a light path from said light source projecting light onto a disc, said objective lens focussing light onto a focal zone and having a predetermined effective diameter; and light controlling means provided in the light path of said lens for preventing light in an intermediate axial region of said light path from reaching said focal zone, said intermediate axial region being located between a near axial region which includes a center of said light path and a far axial region located radially outward from said intermediate region, said light controlling means permitting light in said near and far regions of said light path to reach said focal zone.

EP-A-0 457 553 describes mereby ophtalmic lenses having light controlling means in radially intermediate axial regions for achieving different focal lenghts.

Brief Description of the Drawings

Figures 1 and 2 are schematic diagrams of a conventional optical pickup device having a hologram lens, showing the states where a light beam is focused onto a thin disc and a thick disc, respectively;

Figure 3 is a schematic diagram of another conventional optical pickup device;

Figures 4 and 5 show the states where a light beam is being focused onto a thin disc and a thick disc, respectively, by a common objective lens without using a hologram lens ;

Figure 6A is a graph showing the change in spot sizes in cases when an objective lens according to the present invention is adopted and is not adopted, and Figure 6B is an enlarged view of a part "A" shown in Figure 6A;

Figure 7A is a schematic diagram of an optical pickup according to the present invention showing the states where a light beam is being focused onto two discs of different thicknesses, and Figures 7B and 7C are enlarged views of the focal points shown in Figure 7A for thin discs and thick discs, respectively.

Figure 8 is a perspective view of an objective lens of the optical pickup shown in Figure 7A, according to the present invention;

Figure 9 is a schematic diagram of an objective lens according to an embodiment of the present invention adopted for the optical pickup shown in Figure 7A, showing a state where a light beam is being focused onto a disc;

Figure 10A is a section view of an objective lens having a light controlling film on the surface thereof, according to another embodiment of the present invention;

Figure 10B is a section view of an objective lens according to still another embodiment of the present invention;

Figure 11 is a plan view of an objective lens having a square light control groove, according to another embodiment of the present invention;

Figure 12A is a schematic diagram of an objective lens according to another embodiment of the present invention, showing a state where a light is being focused onto a disc, and Figure 12B is a cross-sectional view of an objective lens according to still another embodiment of the present invention;

Figure 13 is a perspective view of the objective lens shown in Figure 12a;

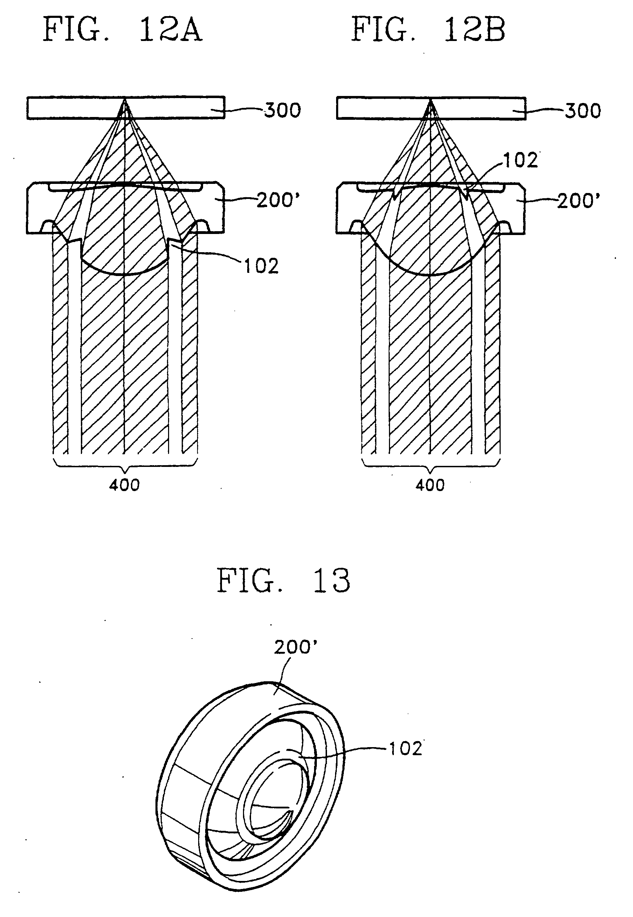

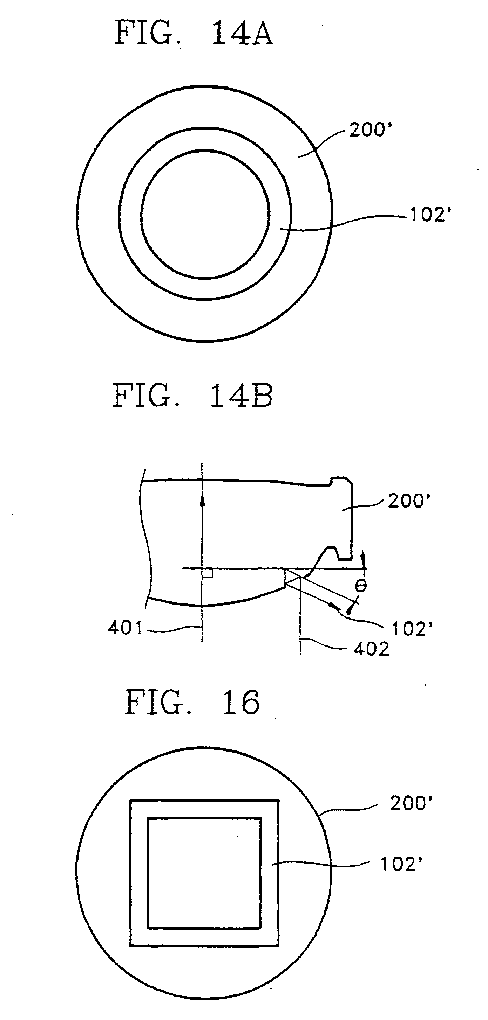

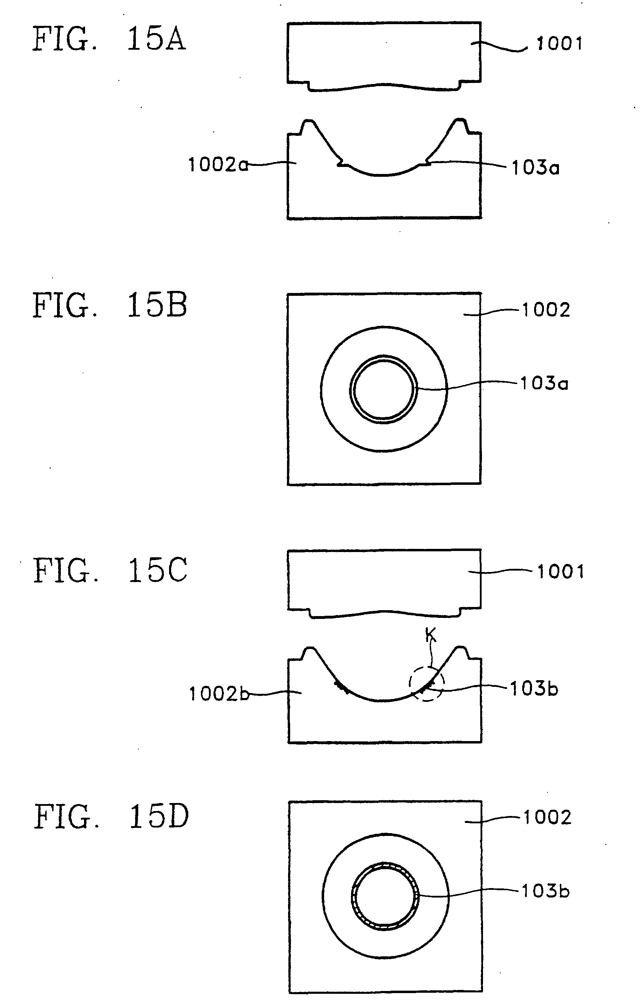

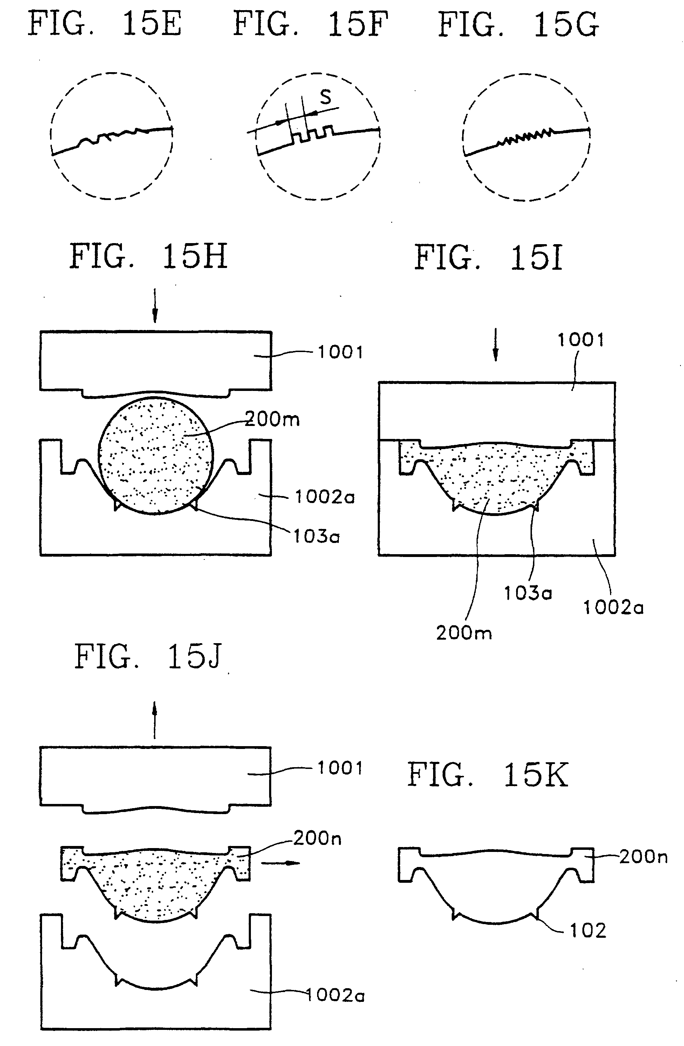

Figures 14A and 14B are a plan view and a partially enlarged view, respectively, of the objective lens shown in Figure 12A; Figure 15A is a side view of a mold for manufacturing an objective lens according to an embodiment of the present invention, Figure 15B is a plan view showing the inside of the lower frame of the mold shown in Figure 15A, Figure 15C is a side view of a mold for manufacturing an objective lens according to another embodiment of the present invention, Figure 15D is a plan view showing the inside of the lower frame of the mold shown in Figure 15C, Figures 15E through 15G are enlarged views of a portion K shown in Figure 15C, illustrating various embodiments of the present invention, Figure 15H and 15I show a manufacturing process of an objective lens according to the present invention, and Figure 15J is a side view of the objective lens manufactured by the processes shown in Figures 15H and 15I;

Figure 16 is a plan view of an objective lens according to still another embodiment of the present invention;

Figures 17 and 18 are schematic diagrams of an objective lens according to still yet another embodiment of the present invention, showing states where a light beam is being focused by a plane lens onto two discs of different thicknesses, respectively;

Figures 19 and 20 are three-dimensional plots showing the states where the light is focused onto a thick disc and a thin disc, respectively, by the lens device according to the present invention;

Figures 21 and 22 are plan views of each photodetector in the case of using a thick disc and a thin disc in the optical pickup according to the present invention, showing the states where light is incident to the photodetector from a 1.2mm disc and from a 0.6mm disc, respectively;

Figure 23 is a plan view of an eight-segment photodetector adopted for the optical pickup according to the present invention;

Figures 24-26 and 27-29 are plan views showing the light receiving region formed on the eight-segment photodetector, by an objective lens position relative to a thin disc and a thick disc, respectively;

Figure 30 shows the focus signals obtained from the eight-segment photodetector shown in Figure 23;

Figure 31 is a graph for comparing the change of the focus signals detected by the photodetector in the optical pickup according to the present invention adopting two discs having different thicknesses;

Figure 32 is a flowchart showing the sequence of driving the optical pickup according to the present invention;

Figure 33 shows the position where the focus signal is generated in a current-versus-time graph depending on the focus current variation, in the flowchart of Figure 32;

Figures 34 and 35 are current-versus-time graphs comparing the focus signal with the first and second reference values used in the flowchart of Figure 32, respectively; and

Figure 36 is a block diagram of a digital equalizer used in the optical pickup according to the present invention.

Best mode for carrying out the Invention

In the present invention, the light in an intermediate region around an axis in the center of a light travelling path is blocked or shielded. The intermediate region is located between a region near the axis ("near axial region") and a region farther from the axis ("far axial region"). Blocking the light in the intermediate region permits the light from the near and far axes regions to form a small light spot while minimizing side lobes around the light spot formed in a focal zone of the lens by suppressing interference of light otherwise present in the intermediate region.

Here, the near axis region represents the region around the central axis of the lens (i.e., the optical axis) having a substantially negligible aberration and focussing on a region adjacent to the paraxial focal point. The far axis region represents the region which is relatively farther from the optical axis than the near axis region and forms a focus region adjacent to the marginal focus. The intermediate region is the region between the near axis region and the far axis region.

Alternatively, a near axis region and a far axis region can be defined by the optical aberration amount in a thick disc. An objective lens must have very small amount of optical aberration (e.g., spherical aberration, coma, distortion, etc.). Generally, an objective lens should have average aberration below around $0.04\lambda$ (where $\lambda$ denotes the wavelength of light transmitted to the lens) in order to use in an optical pickup device. An objective lens having optical aberration greater than $0.07\lambda$ is considered as unacceptable for use in an optical pickup device. As the thickness of the disc increases, the optical aberration increases. Thus, if the objective lens having optical aberration below $0.04\lambda$ is used for a predefined or thin disc (e.g., DVD), it produces a large amount of optical aberration (mainly spherical aberration) for a thicker disc (e.g., CD).

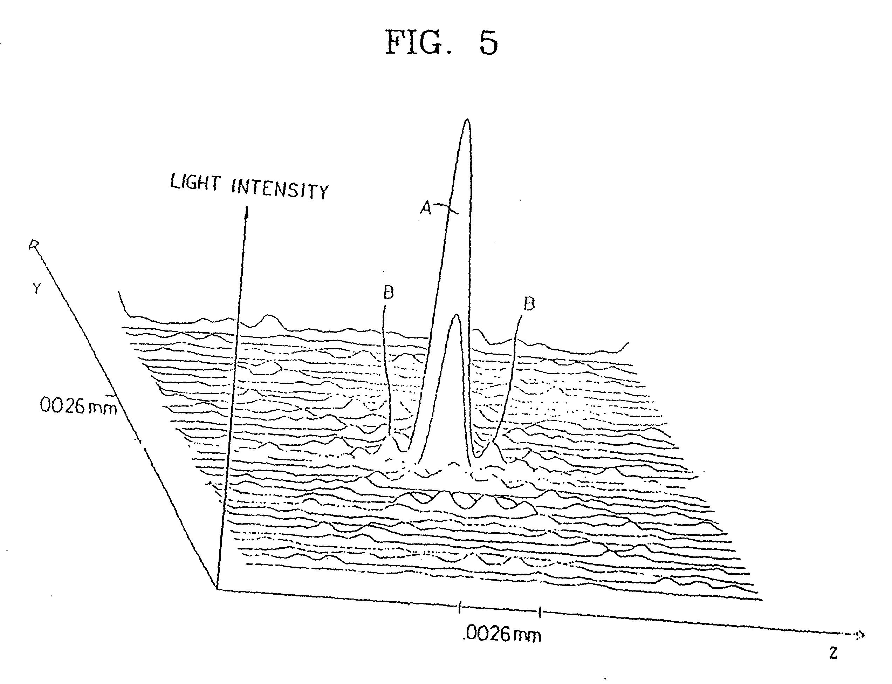

Furthermore, the unwanted peripheral light (B) shown in Figure 5 occurs where the optical aberration is between $0.04\lambda$ and $0.07\lambda$. In order to compensate the large optical aberration in a thick disc, the near axis region is defined where the optical aberration is below $0.04\lambda$. And, the far axis region is defined where the optical aberration is greater than $0.07\lambda$. Thus, the intermediate region is defined between $0.04\lambda$ and $0.07\lambda$ to suppress the interference occurred by the spherical aberration. More explanation of Figure 5 is provided below.

To this end, in the intermediate region between the near axis and the far axis regions along the incident light path, there is provided light controlling means of an annular shape or a polygonal shape such as a square shape for blocking or scattering light. This invention utilizes the fact that the light of the far axis region does not effect the central light portion of the light spot but the light of the intermediate region between the near axis and the far axis does.

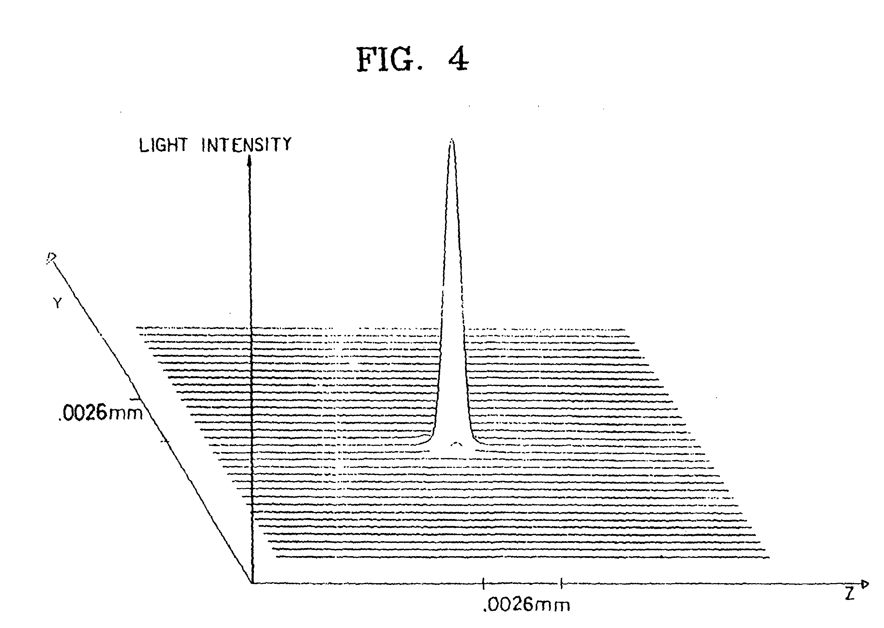

Figure 4 shows a state where a light having a wavelength of 650nm is focused onto a disc having a thickness of $0.6\pm0.1$mm and a refractive index of 1.5 by an objective lens having a refractive index of 1.505. As shown, the light spot has a diameter of $0.85\mu$m at a point of $1/e^2$ (~13% of the light intensity).

Figure 5 shows a state where a light is focused onto a disc having a thickness of $1.2\pm0.1$mm under the same conditions as above. Referring to Figure 5, the light spot, which has a diameter $2\mu$m, is relatively focused in a central part (A) but is also focused in other parts (B). At this time, the light intensity of the other parts (B) is 5~10% that of the central part (A). This is because the light which is incident onto a region far from an optical axis is affected by spherical aberration, the degree of which depends on different disc thicknesses.

As described above, the light spot formed on a thick disc is larger than that formed on a thin disc, which is due to the spherical aberration. Also, since the light incident onto a far axis region, i.e., a region relatively far from the optical axis, is focused onto an area different (surrounding) from the optical axis and is scattered, the light of the far axis region does not effect the focusing of the light spot of the central part (A). However, as described above, since the light present between the near axis and the far axis interferes with the focusing of the light of the near axis, the amount of the peripheral light (B) of the focused light becomes greater. In other words, the light in the intermediate region between the near axis region and the far axis region experiences interference when the present invention is not employed, so that peripheral light beams (B) are generated around the central light beam (A), as shown in Figure 5. Such peripheral light beams generally have about 6-7% intensity of the central light beam, thereby increasing jitter during light detection and thus making accurate data recording and reproduction difficult.

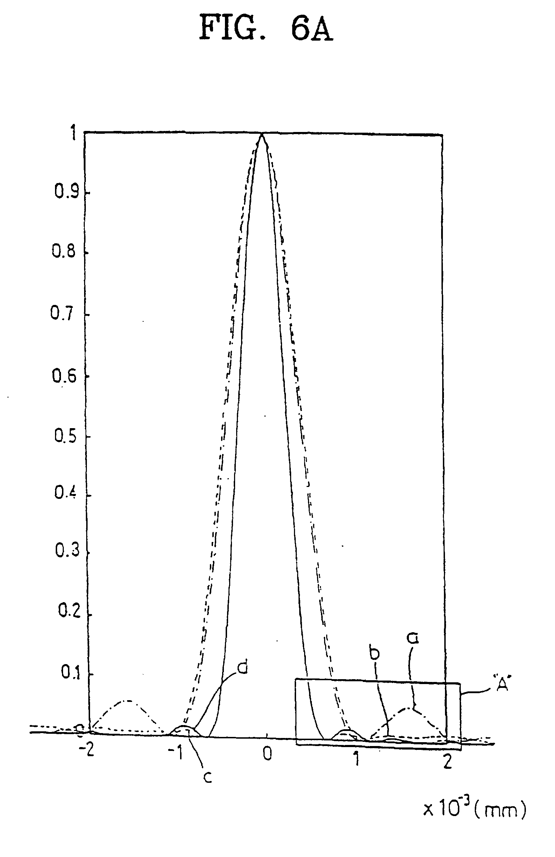

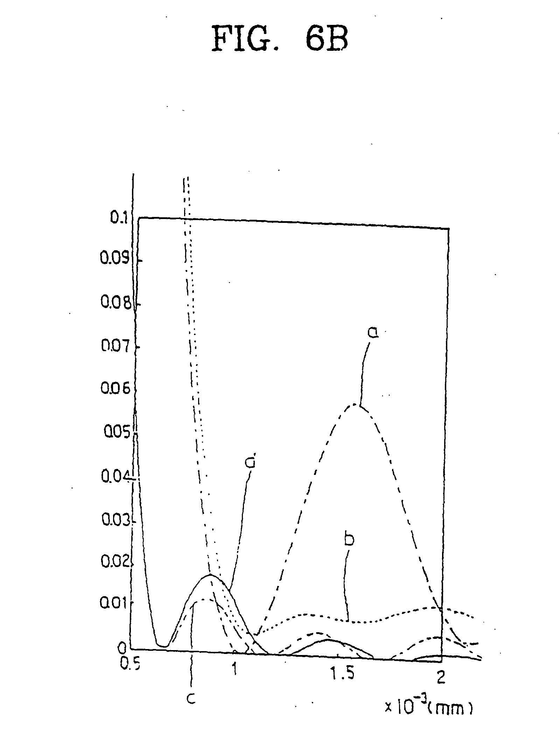

Figure 6A shows graphs (a) through (d) illustrating the change in the light spot sizes in cases when the light controlling means according to the present invention is adopted and is not adopted. In Figure 6A, graphs (b) and (c) are obtained when the light controlling means is adopted and graphs (a) and (d) are obtained when the light controlling means is not adopted. At this time, an objective lens having a numerical aperture of 0.6 and an effective radius of 2mm is used. As an example of the light controlling means .for blocking or scattering the light, an annular shaped light controlling film having a central height of 1.4mm from the optical axis and a width of 0.25mm is adopted.

Under the above conditions, graphs (c) and (d) are curves showing the change in light spot sizes in case of adopting a 0.6mm disc and graphs (a) and (b) are ones in case of adopting a 1.2mm disc. Here, graphs (b) and (c) show the spot state present when the present invention is adopted.

It is understood that the difference in spot size at central portion "A" of Figure 5 is within 3% depending on the presence or absence of the light controlling film in a case of adopting a 0.6mm disc. However, the size of a portion "B" shown in Figure 5 is noticeably reduced by using the light controlling film in the case of adopting a 1.2mm disc.

Therefore, as described above, according to the present invention, the light passing through the intermediate region between the near axis and the far axis regions is controlled. For this purpose, there is provided along the light path a light controlling means for controlling (e.g., blocking, scattering, diffracting, absorbing or refracting) the light in the intermediate region, thereby suppressing an increase in the size of the peripheral light of the light spot and reducing the spherical aberration which would otherwise occur.

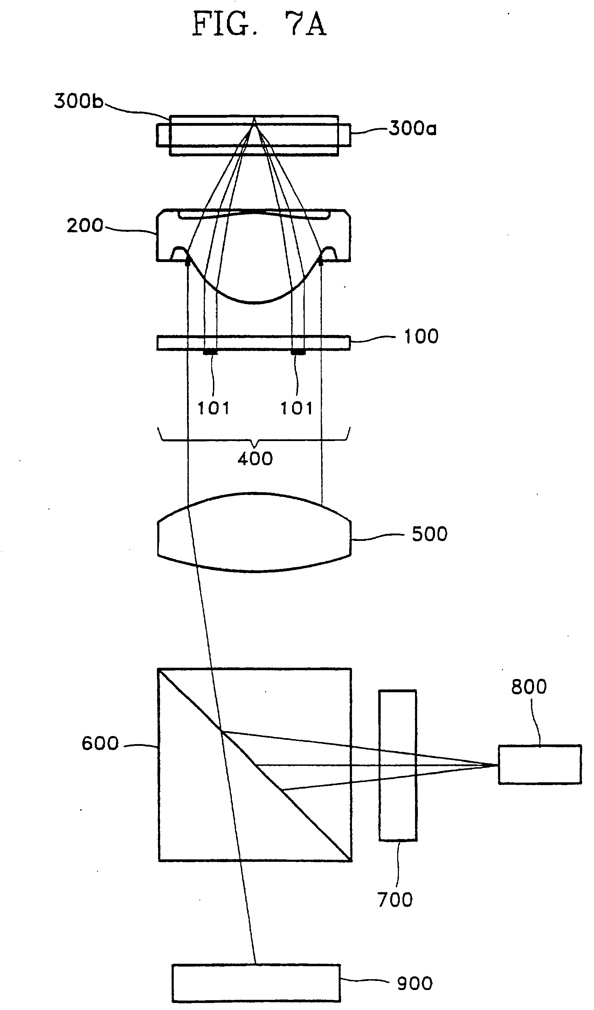

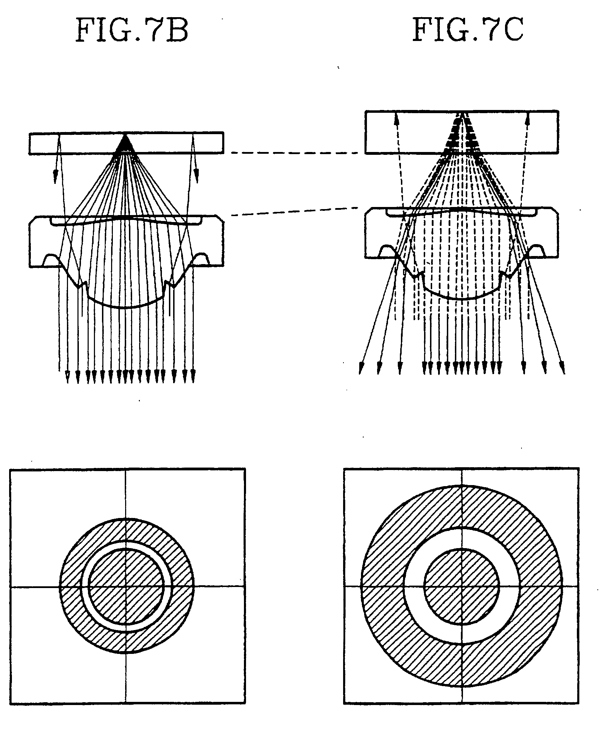

Figure 7A is a schematic diagram of an optical pickup device adopting the objective lens device according to a first embodiment of the present invention, where the light focused states with respect to thin and thick discs are compared. Figures 7B and 7C are enlarged views of the focal points shown in Figure 7A for thin discs and thick discs, respectively. As shown in Figures 7B and 7C, the objective lens 200 is moved to focus the light on either thin or thick disc.

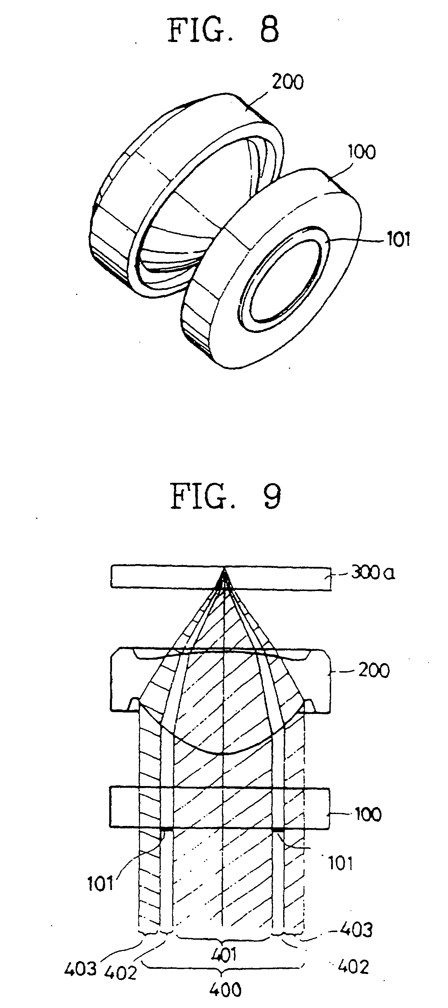

Figure 8 is a perspective view of an objective lens 200 and a light controlling member 100 as light controlling means.

In Figure 7A, a reference numeral 300a represents a comparatively thin information recording medium, e.g., 0.6mm thick disc, and a reference numeral 300b represents a comparatively thick disc, e.g., 1.2mm thick disc. It should be noted that the diameter of thin and thick discs can be same. Also, the bottom surfaces of the discs can be located in either a different plane or in the same plane depending on the disc holder mechanism (not shown) for supporting and rotating the discs 300a and 300b during operation. The drawing has been modified to show the difference in the thickness. The laser light passes through an aperture in the disc holder, as is conventional.

A general objective lens 200 is positioned in front of disc 300a or 300b. The objective lens 200 having a predetermined effective diameter focuses an incident light 400 from a light source 900 and receives the light reflected from disc 300a or 300b. As shown in Figure 9, there is provided a light controlling member 100 in the rear of the objective lens 200, which is a feature of the present invention. The light controlling member 100 is transparent and has a light controlling film 101 of an annular shape for suppressing, such as blocking or scattering, the incident light on its surface. The outer diameter of light controlling film 101 is smaller than the effective diameter of objective lens 200. The light controlling member is made of glass or plastic. Cr, $CrO_2$ or Ni, for example, can be used as the light controlling film 101. Alternatively or additionally, any of the surface irregularities discussed below with reference to figures 12-17 could be used on the light controlling member.

A collimating lens 500 and a beam splitter 600 are provided between light controlling member 100 and the light source 900, as shown in Figure 7A. A focusing lens 700 and a photodetector 800 are provided along the travelling path of the light reflected from beam splitter 600. Here, the photodetector 800 is basically a quadrant structure.

In the optical pickup device having the aforementioned configuration according to the present invention, the light controlling film 101 suppresses among the incident light beams 400, the light beam 402 of the intermediate region passing through the region between the near axis and the far axis regions, thereby transmitting only the light beams 401 and 403 passing through the near and far axes regions, as shown in Figure 9. For example, a light controlling film 101 made of Chromium (Cr) would block the light beam 402 from passing through the light controlling member 100. Moreover, the light beam 402 can be scattered, reflected, diffracted or refracted depending on the surface roughness of the light controlling film 101.

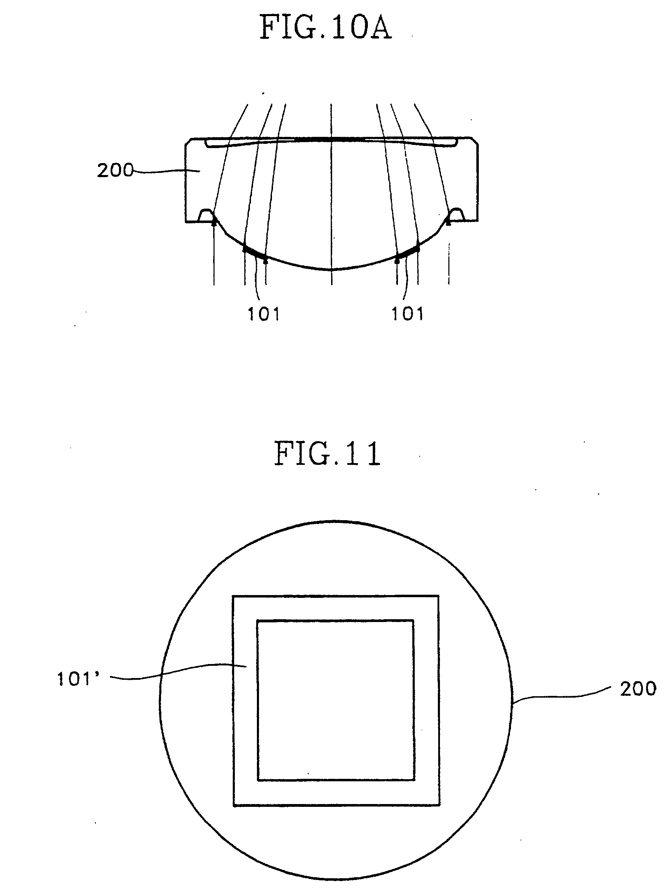

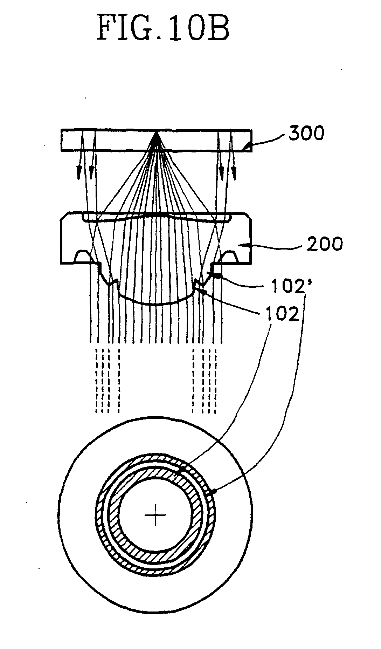

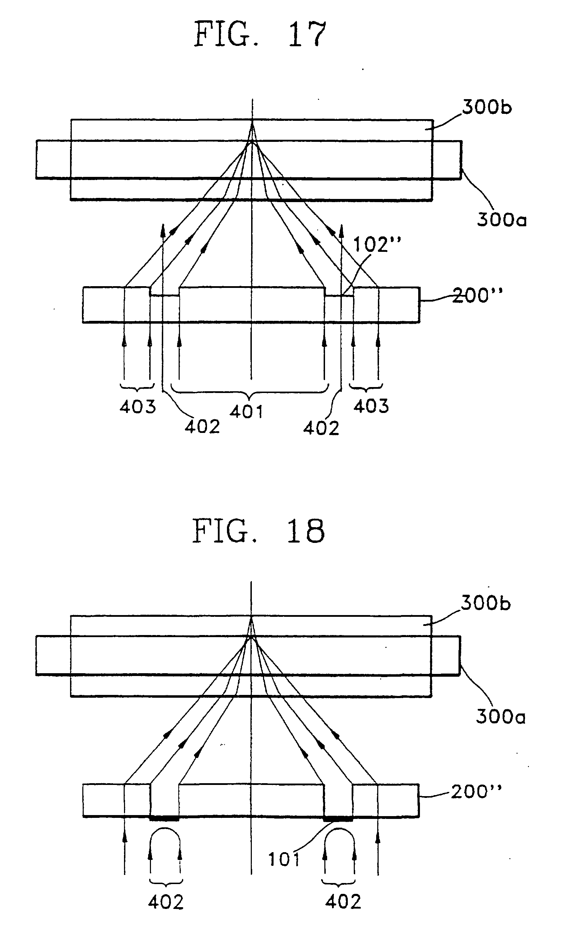

The light controlling film 101 having the above-described function is directly coated on one surface of objective lens 200, as shown in Figure 10. As shown in Figure 11, the light controlling film 101' may be modified in its shape to have a polygonal shape such as a square shape or a pentagonal shape as shown in Figure 16, rather than a circular shape. Moreover, an additional light controlling film 101 or 101' can be provided to define the near axis region depending on the thickness of a disc. For example, the objective lens is optimized to a thin disc and a corresponding near axis region should be defined. Therefore, additional light controlling film or groove can be provided to define an appropriate intermediate region for the thin disc according to its thickness. In Figure 10B, an additional annular light controlling groove 102' is added in order to optimize a disc having a thickness of 0.9mm. Thus, the objective lens 200 can be used for discs having thicknesses of 0.6mm, 0.9mm, or 1.2mm, for example.

Figures 12A and 12B illustrate an objective lens according to still another embodiment of the present invention. Figures 13 and 14A are a perspective view and a front view of the objective lens shown in Figure 12A, respectively. In these embodiments, there is provided a light deflecting means 102 as the light controlling means in objective lens 200'. In other words, a structural pattern, i.e., a light controlling groove 102 of an annular shape, for partially blocking, diffracting, refracting, or scattering the incident light, is provided in the initial light receiving side (Figure 12A), or on the light emitting side (Figure 12B) of the objective lens 200'. Moreover, the grooves 102 can be provided in both sides of the objective lens 200'. Alternatively, the light deflecting means 102 can take the form of a projection or wedge-shaped rib 102 as shown in Figure 15K, for instance. The wedge-shaped rib 102 can also be placed on either side, or both sides, of the objective lens 200'. The outer diameter of light controlling groove or light controlling wedge-shaped rib 102 is smaller than the effective diameter of objective lens 200'.

Like the aforementioned light controlling film 101, the light controlling groove or wedge-shaped rib 102 is provided in the light region between the near axis and the far axis and functions to redirect (e.g., reflect, refract or scatter) the incident light in a direction irrelevant to the light focusing or suppress (e.g., block the incident light.

The objective lens 200' can be manufactured by a general high-pressure injection molding method (not shown) or a compression molding method, as shown in Figures 15H through 15K, using a mold having a pattern corresponding to the wedge-shaped rib 102.

The lower mold 1002a has a pattern having one or multiple grooves 103a formed in correspondence with the light controlling rib 102 for dispersing the light in the intermediate region, as shown in Figures 15A and 15B, so that the fabricated lens is provided with a stepped or wedge-shaped light controlling means protruding on the surface of the lens, but was receded as a groove in the .description of Figure 12A above or a light controlling means having a diffraction lattice. The groove 103a is formed at the intermediate region between the near axis region and the far axis region. Also, the light controlling means 102 may in the alternative be engraved, etched or scratched on the surface of the lens. As shown in Figures 15C and 15D, an uneven surface formed by an erosion or etching treatment in the portion K comprises the light controlling means 102 of the lens according to another embodiment of the present invention.

Figures 15E through 15G illustrate various examples of the uneven surfaces (rough, toothed, jagged surfaces) for forming the light controlling means 102, which may be composed of just one form of surface unevenness or combination of types.

In Figure 15F, the light controlling means 102 may have an evenly-stepped shape forming grating pattern to diffract the incident light in the intermediate region. The grating pattern has a pitch S which is less than approximately 200μm for a laser wavelength of 650nm.

Figure 15H shows a lens material 200m such as glass or plastic is interposed between the upper mold 1001 and the lower mold 1002a. As shown in Figure 15I, the upper mold 1001 and the lower mold 1002a are brought close to each other to compressively mold the lens material 200m. Then, as shown in Figure 15J, the upper mold 1001 and the lower mold 1002a are separated and the objective lens 200m is obtained.

The light controlling groove 102 is preferably formed for the bottom surface of the objective lens 200' to be oriented by a predetermined angle θ with respect to a perpendicular of the optical axis, as shown in Figure 14B. The light of the intermediate region, reflected from light controlling groove 102, is preferably scattered or reflected in a direction not parallel to the optical axis.

Figure 16 is a front view of an objective lens having a light controlling groove as a light controlling means, where a light controlling groove 102' of a square shape is formed in objective lens 200' according to still another embodiment of the present invention.

Light controlling groove 102' can be formed of a polygonal shape such as a square shape. Moreover, the objective lens can be modified to have more than one light controlling groove to control the incident light. It is also possible to use any of these surface irregularities (e.g., groove, rib, toothed, rough and jagged) on a separate transparent member such as the light controlling members 100.

In the above embodiments, a convex lens was used as the objective lens 200 or 200', which might be replaced by a planar lens using a diffraction theory, such as a hologram lens or a Fresnel lens. Specifically, when the lens is provided with light controlling means, an annular or square light controlling groove 102" is formed in a plane lens, as shown in Figure 17, or a separately fabricated light controlling film 101 having an annular or square shape is fixed or coated, as shown in Figure 18. Light controlling groove 102" transmits the light 402 of the intermediate region without diffraction. Otherwise, light controlling groove 102" reflects light in the intermediate region in a direction irrelevant to the light focusing. Thus, the light 402 of the intermediate region is prevented from reaching the light spot of a disc.

A light controlling film 101 shown in Figure 18 absorbs, scatters and/or reflects the light 402 of the intermediate region, which is incident onto plane lens 200", prevents the light 402 of the intermediate region from reaching the light spot of a disc. For example, when a dark colour paint is used as a light controlling film, the film absorbs the light. Also, the light controlling groove or the light controlling film shown in Figures 17 and 18 can be modified to have more than one annular groove or film depending on the thickness of the disc.

It should be noted that the lens device structure described above is not limited to an objective lens used in an optical pickup device.

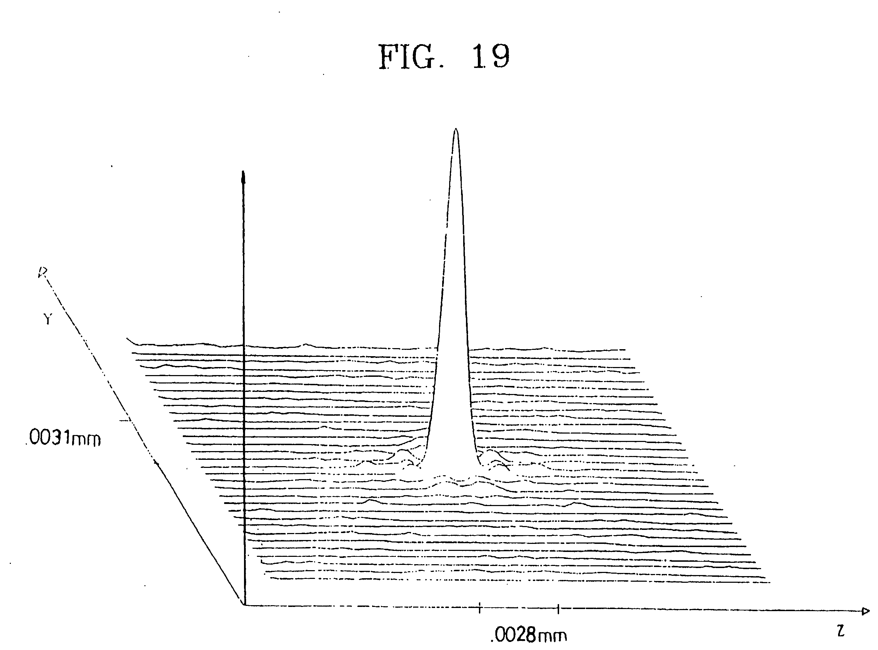

Figure 19 shows the size of the light spot on a 1.2mm thick disc, as obtained by the above embodiments. The objective lens adopted herein has an effective diameter of 4mm, a diameter of the near axis region of 2mm and that of the far axis region from 2.4mm to 4.0mm. Thus, the light controlling means blocks the light beams ranging from 2.0mm to 2.4mm in diameter. The inner diameter of light controlling means having annular shape can be changed to be in the range of 2.0 to 3.0mm to optimize the focusing spot in the disc. Also, the inner diameter and the width of the light controlling means can also be between 1.1. to 1.4mm (such as 1.2mm) and between 0.1 and 0.25mm (such as 0.15mm), respectively. Other ranges are possible depending on system considerations.

In the light spot formed under the above conditions, as the result of the measurement, the diameter of the light spot at a point of $1/e^2$(~13%) of the central light intensity was 1.3μm. Compared to the device shown in Figure 5, which does not adopt a light controlling film, the light amount of the portion "B" shown in Figure 5 is reduced by more than 70% in the case of the device according to the present invention, which adopts a light controlling film.

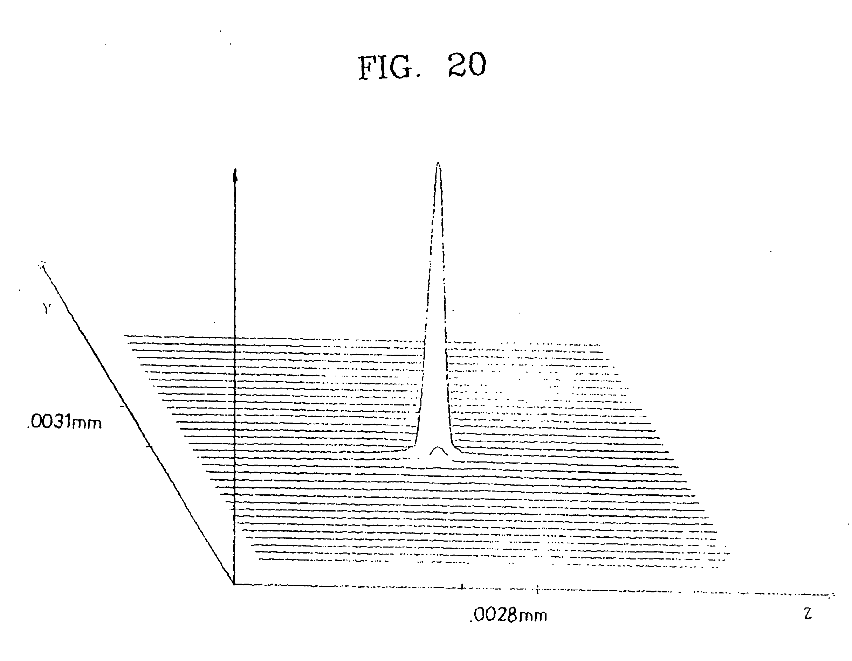

Figure 20 shows the size of the light spot on a comparatively thin disc, i.e., a 0.6mm disc, under the above-mentioned conditions. According to the measurement, the diameter of the light spot at a point of $1/e^2$ (~13% of the central light intensity was 0.83μm.

As described above, according to the present invention, a light spot can be formed on a disc at an optimal state. As shown in Figure 7A, the light reflected from disc is transmitted through the objective lens 200, the light controlling member 100 and the collimating lens 500 and is reflected from the beam splitter 600 to then be transmitted through the focusing lens 700 to reach the photodetector 800 where it is detected and converted to an electric signal. The photodetector 800 is for obtaining a focus error signal by astigmatic aberration and is generally a quadrant detector.

Hereinbelow, the characteristics of the photodetector 800 in the optical pickup device according to the present invention will be described in detail.

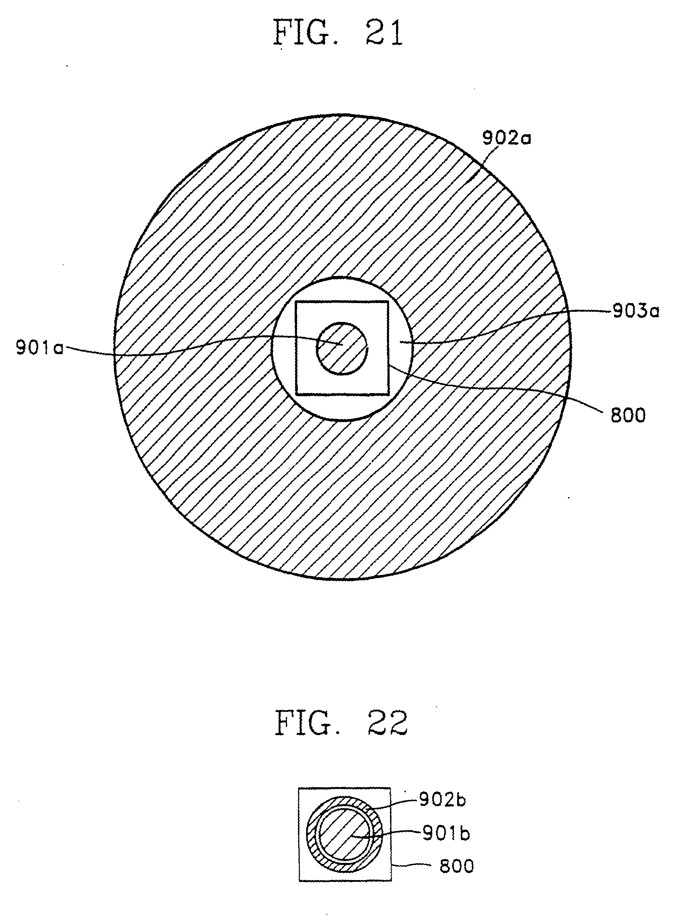

As shown in Figures 21 to 22, a spot formed in the center of the photodetector 800 has central regions 901a and 901b corresponding to the light of the near axis region and peripheral regions 902a and 902b corresponding to the light of the far axis region. The "a" and "b" designations signify a light spot on a thick disc and on a thin disc, respectively. Specifically, Figure 21 shows the case of a comparatively thick disc, e.g., a 1.2mm disc, and Figure 22 shows the case of a comparatively thin disc, e.g., a 0.6mm disc. The change in diameters is insignificant in the central region 901a by the light of the near axis region, irrespective of the disc thickness. However, the change in diameters is significant in the intermediate region 903a, in which the light is blocked by the light controlling member 100.

First, referring to Figure 21, the central region 901a corresponding to the near axis region is in the center of the photodetector 800 and the peripheral region 902a surrounds the photodetector 800. The intermediate region 903a between the central region 901a and the peripheral region 902a is the portion from which the light is eliminated by a light controlling member. Since the peripheral region 902a and the intermediate region 903a are substantially enlarged by spherical aberration in this example where the reflective surface of the disc is near the paraxial focus, only the light of the near axis is used in reproducing information from a 1.2mm thick disc.

Referring to Figure 22, both the central (i.e., near axis) region 901b and the peripheral (i.e., far axis) region 902b are formed on the detection surface of the photodetector 800 because, in this example, the reflective surface of the thin disc is near the minimum circle of the beam focus. In other words, all of the light of the near and far axes regions are used in reproducing information from a thin (0.6mm) disc, excluding the light of the intermediate region which is eliminated by a light controlling member. Here, the diameter of the near axis region 901b, being paraxial, maintains a relatively constant value irrespective of a disc type.

As described above, in order to read information from discs having different thicknesses, the optical pickup device according to the present invention adopts a photodetector 800 devised so as to receive only the light of the near axis region in reading information from a thick disc and receive the light of the near and far axes regions in reading information from a thin disc. Therefore, when a thick disc is used, a signal corresponding to the light of the near axis region is obtained. When a thin disc is used, a relatively higher intensity signal, corresponding to the light of the near and far axes regions, is obtained.

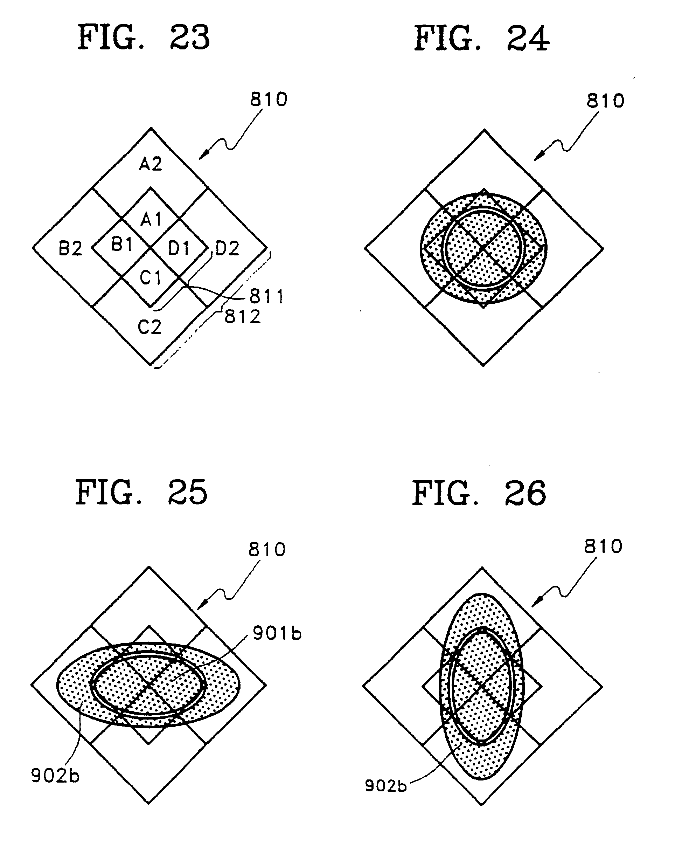

Figure 23 shows another type of photodetector 810, which has an octahedron or eight-segment structure wherein a second detection region 812 is provided around a first detection region 811 which is centrally located and equivalent to the quadrant photodetector shown in Figure 21. Here, the first detection region 811 consists of four square first-light-receiving elements A1, B1, C1 and D1, and second detection region B12 consists of four L-shaped second-light-receiving elements A2, B2, C2 and D2.

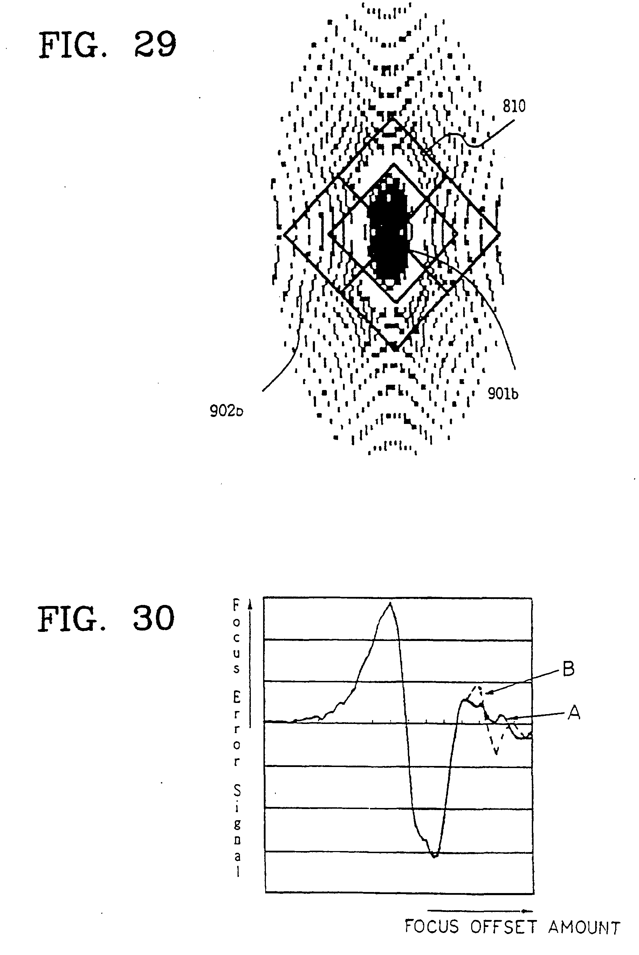

A focus error signal obtained by using the octahedron photodetector 810 is shown in Figure 30, when information is read from a thick disc. Here, the signal from the first light receiving region 811 only is indicated by a solid line A and that received from both the first and second light receiving regions 811 and 812 is indicated by a dotted line B.

Figures 24-26, and 27-29 show the light receiving states of the photodetector, when a thin disc (digital video disc) is used, and when a thick disc (compact disc) is used, respectively.

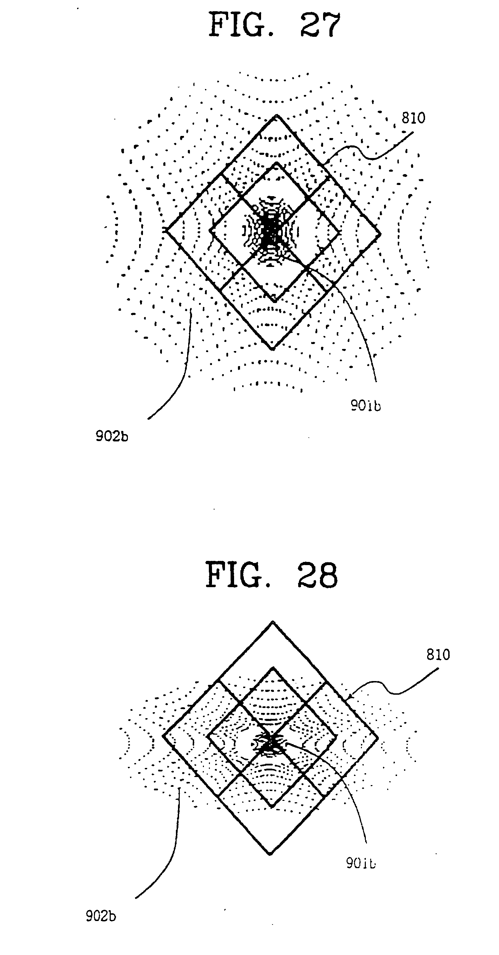

The first detection region 811 has dimensions such that the size of the first region 811 should be optimized to receive the light from the near axis region without loss when information is read from a thick disc, and not to receive the light from the far axis region. Additionally, the first and second detection regions 811 and 812 have dimensions such that the light beams of the near axis and far axis regions are all received when information is read from a thin disc, as shown in Figure 24. When information is read from a thick disc, the light of the far axis region impinges on the second light receiving region 812, as shown in Figure 27.

Figures 24, 25 and 26 show the light receiving states when an objective lens is in focus with respect to a thin disc, when the objective lens is positioned too far from the disc, and when the objective lens is positioned too near the disc, respectively. Similarly, Figures 27-29 show the light receiving states when an objective lens is in focus with respect to a thick disc, when it is positioned too far from the disc, and when it is positioned too near the disc, respectively.

In the photodetector 810 having the aforementioned structure, the entire signal, i.e., that from both the first and second light receiving regions 811 and 812, is used in reading information from a thin disc, and only the signal from the first light receiving region 811 is used in reading information from a thick disc.

Figure 30 shows the focus error signal changes by the signal from the first light receiving region (solid line A) and by the entire signal from the first and second light receiving regions (dashed line B) when information read from a thick disc. The difference between the shapes indicated by the solid line A and the dotted line B comes from the amount of scattered light in a thick disc. In the octahedron photodetector 810, scattered light that is originated from a large spherical aberration of the thick disc is detected mainly by the outer photodetector 812. This scattered light detected by the outer photodetector 812 causes increase in the amplitude of the focus error signal which resulted an unstable focus error signal as shown in the dotted line B. And in turn, when only the detected light impinging on the inner photodetector 811 is used, it can be possible to reduce the effect of the scattered light on the S-curve as shown by the solid line A. In practical use, the focus error signal as denoted by A is better than B since it has a single zero-cross point for the focus error signal and the symmetry of the signal at the zero-cross point are important characteristics to identify the on-focus position of an objective lens.

As understood from the above, when information is read from a thick disc, the focus error signal components are obtained by using only the light of the near axis region, thereby obtaining a stable focus error signal as shown in Figure 30.

As described above, in the focus controlling method of the objective lens device and optical device adopting the same according to the present invention which has a size reducing effect of the light spot, i.e., the light amount of the portion "B" of Figure 5, and a focus error signal stabilizing effect, since only a single focus error signal is generated irrespective of a disc thickness, an additional focus control means is not required in order to use the different thickness disks.

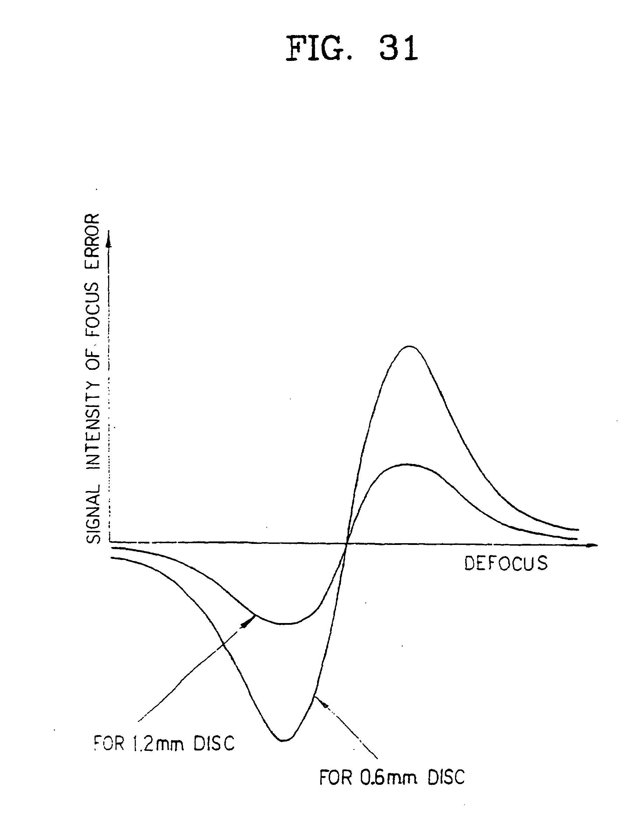

Also, the magnitudes of the detected focus error signals are different depending on the disc thickness. In other words, as shown in Figure 31, all of the light of the near and far axes regions reach a photodetector in the case of a thin disc, and only the light of the near axis region reaches the photodetector in the case of a thick disc, thereby easily discriminating the disc type.

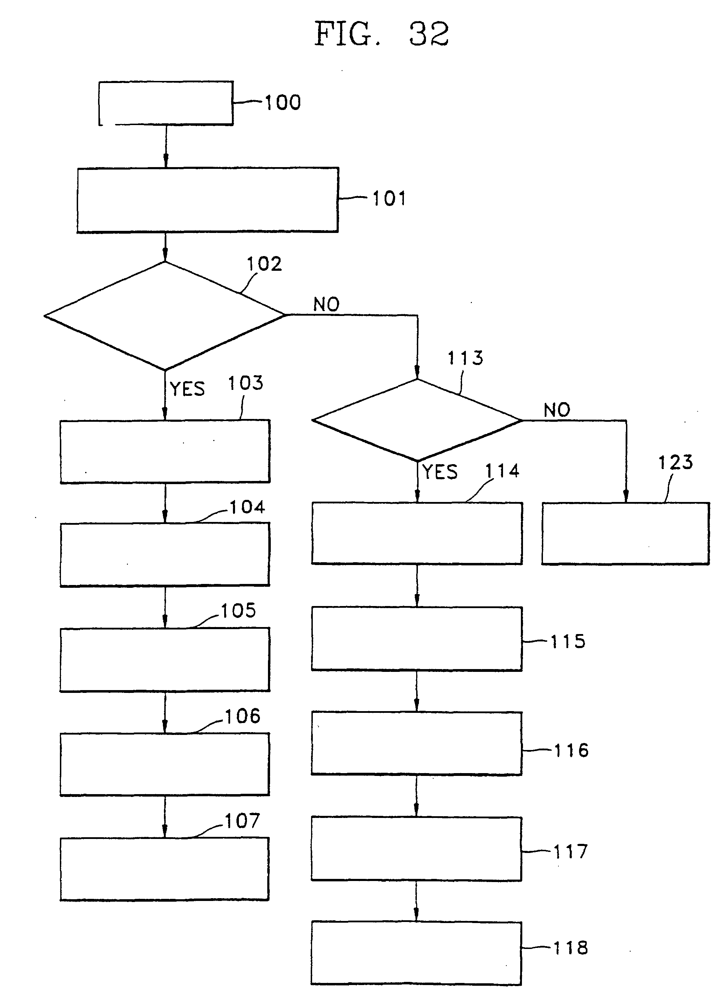

The operation of discriminating the disc type will now be described in detail with reference to the flowchart of Figure 32.

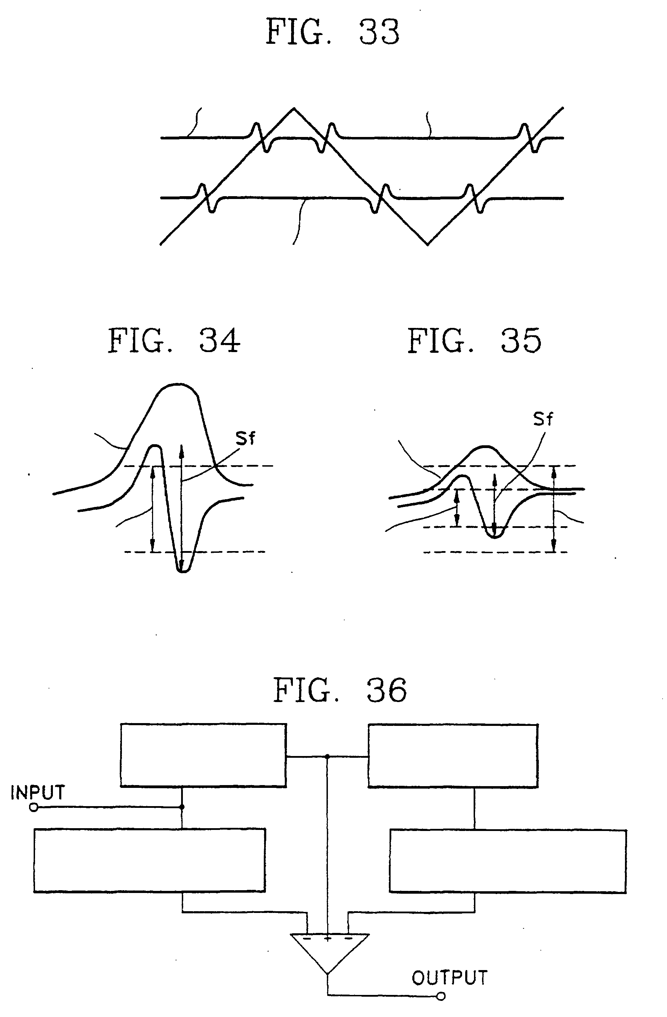

If a thin or thick disc is inserted (step 100), focus current (which controls the position of the objective lens relative to the disc) is increased or decreased to discriminate the range of an objective lens, i.e., the type of a disc, as shown in Figure 33. The objective lens is moved up and down m times (m=1,2,3,...) within its range of focus adjustment, thereby obtaining a sum signal from the photodetector (adding together all signals from each of the eight quadrants) and a focus error signal ($S_f$) step 101). Since a quadrant photodetector is used, the focus error signal is obtained by a conventional astigmatic method such as disclosed in U.S. Patent No. 4,695,158 to Kotaka et al, for example. Being conventional, an explanation thereof will not be belabored.

Experimentally it has been shown that the amplitude of the focus error signal for a thin disc reproduction is four times that for a thick disc reproduction, that the light intensity is enough for compatibility with both disc types and that a focus error signal stabilization is realized.

The amount of spherical aberration is reduced by the above-described method to reproduce a signal recorded onto a disc. However, the spherical aberration is larger than that of the optical pickup for the conventional compact disc player, thereby resulting in the deterioration of a reproduction signal. Therefore, it is preferable that a digital waveform equalizer is used, such as shown in Figure 36, which, assuming an input signal fi(t), produces an output signal fo(t) in accordance with

$$fo(t) = fi(t+\tau) - K[fi(t) + fi(t+2\tau)]$$

where $\tau$ is a predetermined delay time, and K is a predetermined amplitude divider, as shown in Figure 32 (steps 106 and 117).

Once the focus error signal $S_f$ and the sum signal are obtained (step 101), it is determined whether the focus error signal $S_f$ is greater than a first reference signal for a thin disc (step 102). At this time, the sum signal may be also compared with the first reference signal in accordance with the design conditions.

As shown in Figure 34, if the first reference value is less than the focus signal $S_f$ or the sum signal, it is determined that the disc is thin (step 103) and focusing and tracking are continuously performed (step 104) in accordance with this determination, thereby obtaining a reproduction signal (step 105). The reproduction signal passes through a waveform equalizer (step 106) for a thin disc to obtain a waveform equalizing signal (step 107). However, if the first reference value is greater than the focus error signal $S_f$ of the sum signal, it is then determined whether the focus error signal is greater than the second reference value corresponding to the thick disc (step 113).

As shown in Figure 35, if the first reference value is greater than the focus error signal $S_f$ or the sum signal and the focus error signal $S_f$ or the sum signal is greater than the second reference value (step 113), it is determined that the disc is thick (step 114) and focusing and tracking are continuously performed (step 115), thereby obtaining a reproduction signal (step 116). The reproduction signal passes through a waveform equalizer (step 117) for a thin disc to obtain a waveform equalizing signal (step 118).

If the focus error signal $S_f$ or the sum signal is smaller than a second reference signal an error signal is generated (step 123). The focus error signal and the sum signal can be used to discriminate the disc type clearly and this method using both signals reduces the discrimination error.

As described above, the lens device according to the present invention has various advantages as follows:

The lens device according to the present invention adopts a light blocking or scattering means which is simple and easy to fabricate, instead of a complex and expensive hologram lens. Also, since the light can be used without being separated by a hologram lens, the lens device has higher light utilizing efficiency than that of the conventional device. In addition, since a very small beam spot is formed, the performance of recording and reproducing information can be enhanced. Since the lens device with a light blocking, refracting, diffracting or scattering means has a single objective lens, it is very simple to assemble and adjust the optical pickup adopting the lens device. Also, since a signal which can discriminate the disc type is always obtained regardless of the thickness of the discs, additional means is not required for discriminating the disc type. In contrast, the conventional device using holgoram has to adopt additional means to discriminate some signals because the device generates multiple signals. Among the multiple signals, one is used for thin discs and another is used for thick discs.

While the invention has been particularly shown and described with reference to preferred embodiments thereof, it will be understood by those skilled in the art that various other changes in form and details may be made therein without departing from the scope of the invention. For instance, the relative position of the discs in the light path can be altered, thereby changing the spot patterns and consequently the details of the various methods using the electrically converted spot patterns.

Industrial Applicability

The present invention can be utilized in an optical system adopted in the fields of recording media for recording/reproducing video or audio data.

**Claims**

1. An optical pickup device for reproducing/recording information from/onto optical discs having different thicknesses comprising:

   a light source (900);

   an objective lens (200) provided along a light path from said light source (900) projecting light onto a disc (300), said objective lens (200) focussing light onto a focal zone and having a predetermined effective diameter; and

   light controlling means (100) provided in the light path of said lens for preventing light in an intermediate axial region of said light path from reaching said focal zone, said intermediate axial region being located between a near axial region which includes a center of said light path and a far axial region located radially outward from said intermediate region, said light controlling means permitting light in said near and far regions of said light path to reach said focal zone at respective focal points.

2. An optical pickup device according to claim 1, further comprising:

   a beam splitter (600) provided between said light controlling means (100) and said light source(900); and

   a photodetector (800) for detecting the reflected light from said disc (300) through said beam splitter (600).

3. An optical pickup device as claimed in claim 1 or 2, wherein said light controlling means (100) blocks the light in the intermediate region of said light path.

4. An optical pickup device as claimed in claim 1 or 2, wherein said light controlling means (100) scatters the light in the intermediate region of said light path.

5. An optical pickup device as claimed in claim 1 or 2, wherein said light controlling means (100) diffracts the light in the intermediate region of said light path.

6. An optical pickup device as claimed in claim 1 or 2, wherein said light controlling means (100) absorbs the light in the intermediate region of said light path.

7. An optical pickup device as claimed in claim 1 or 2, wherein said light controlling means (100) reflects the light in the intermediate region of said light path.

8. An optical pickup device as claimed in claim 1 or 2, wherein said light controlling means (100) transmits the light in the intermediate region of said light path in a direction irrelevant to said focal zone.

9. An optical pickup device as claimed in claim 1 or 2, wherein said light controlling means (100) refracts the light in the intermediate region of said light path in a direction away from said focal zone.

10. An optical pickup device as claimed in claim 1, wherein said light controlling means (100) has a predetermined region for preventing light in an intermediate axial region of said light path from reaching said focal zone, said predetermined region having an outer diameter smaller than the effective diameter of said lens.

11. An optical pickup device as claimed in claim 1, wherein said light controlling means is a light controlling film (101) of a predetermined pattern located on said objective lens (200).

12. An optical pickup device as claimed in claim 1, wherein said light controlling means includes a transparent member (100).

13. An optical pickup device as claimed in claim 12, wherein said transparent member (100) is spaced apart from said objective lens (200) by a predetermined distance.

14. An optical pickup device as claimed in claim 12, wherein said transparent member (100) includes at least one light controlling film of a predetermined pattern.

15. An optical pickup device as claimed in claim 1, wherein said light controlling means includes at least one light controlling film (101) of a predetermined pattern located on said objective lens (200).

16. An optical pickup device as claimed in claim 1, wherein said light controlling means includes at least one surface irregularity (102) of a predetermined pattern.

17. An optical pickup device as claimed in claim 16, wherein said surface irregularity (102) includes a groove having a side wall of a predetermined slope with respect to an axis of said light path.

18. An optical pickup device as claimed in claim 17, wherein said groove (102) is V-shaped.

19. An optical pickup device as claimed in claim 17, wherein said groove (102) has parallel sides and said lens (200") is a flat lens.

20. An optical pickup device as claimed in claim 16, wherein said at least one surface irregularity includes a protruding wedge-shaped rib (102).

21. An optical pickup device as claimed in claim 16, wherein said at least one surface irregularity includes a roughened surface.

22. An optical pickup device as claimed in claim 16, wherein said surface irregularity includes a diffraction lattice for diffracting the light in said intermediate region of said light path away from said focal zone.

23. An optical pickup device according to claim 1, wherein said lens (200) has a refractive surface.

24. An optical pickup device according to claim 1, wherein said lens (200) is a diffractive lens.

25. An optical pickup device according to claim 1, wherein said lens (200) is a planar lens.

26. An optical pickup device as claimed in claim 2, wherein said photodetector (800) includes a first light receiving region for receiving only light in said near axis region reflected from a relatively thicker disc, a second light receiving region surrounding said first light receiving region; wherein said first and second light receiving regions receive light in both near and far axial regions reflected from a relatively thin disc.

27. An optical pickup device as claimed in claim 26, wherein each of said first and second light receiving regions of said photodetector (800) include segments partitioned in quadrants.

28. An optical pickup device as claimed in claim 16, wherein said at least one surface irregularity of a predetermined pattern is formed on at least one surface of said lens (200).

29. An optical pickup device as claimed in claim 1, wherein said intermediate axial region is defined by a disc thickness.

30. An optical pickup device as claimed in claim 1, wherein said disc (300) is of the type of DVD or CD.

31. An optical pickup device as claimed in claim 1, wherein said disc (300) has a thickness of 0.6±0.1mm or 1.2+0.1mm.

32. An optical pickup device as claimed in claim 1, wherein said disc (300) is made of glass or plastic.

33. An optical pickup lens device according to claim 2, wherein said near and far axial regions are defined by the amount of optical aberration.

34. An optical pickup device as claimed in claim 2, wherein said disc (300) is of the type having a different thickness.

**Patentansprüche**

1. Optische Abtastvorrichtung zum Wiedergeben/Aufzeichnen von Informationen von/auf optischen Platten mit unterschiedlicher Dicke, die umfasst:

    eine Lichtquelle (900);

    eine Objektivlinse (200), die auf einem Lichtweg von der Lichtquelle (900) vorhanden ist und Licht auf eine Platte (300) projiziert, wobei die Objektivlinse (200) Licht auf eine Fokuszone fokussiert und einen vorgegebenen wirksamen Durchmesser hat; und

eine Lichtsteuereinrichtung (100), die auf dem Lichtweg der Linse vorhanden ist und verhindert, dass Licht in einem axialen Zwischenbereich des Lichtweges in die Fokuszone gelangt, wobei sich der axiale Zwischenbereich zwischen einem axialen Nahbereich, der eine Mitte des Lichtweges einschließt, und einem axialen Femberelch befindet, der sich radial außerhalb des Zwischenbereiches befindet, und wobei die Lichtsteuereinrichtung zulässt, dass Licht in dem Nah- und in dem Fembereich des Lichtweges an entsprechenden Fokuspunkten in die Fokuszone gelangt.

2. Optische Abtastvorrichtung nach Anspruch 1, die des Weiteren umfasst:

einen Strahlteiler (600), der zwischen der Lichtsteuereinrichtung (100) und der Lichtquelle (900) vorhanden ist; und

einen Fotodetektor (800), der das reflektierte Licht von der Platte (300) über den Strahlteiler (600) erfasst.

3. Optische Abtastvorrichtung nach Anspruch 1 oder 2, wobei die Lichtsteuereinrichtung (100) das Licht in dem Zwischenbereich des Lichtweges sperrt.

4. Optische Abtastvorrichtung nach Anspruch 1 oder 2, wobei die Lichtsteuereinrichtung (100) das Licht in dem Zwischenberelch des Lichtweges streut.

5. Optische Abtastvorrichtung nach Anspruch 1 oder 2, wobei die Lichtsteuereinrichtung (100) das Licht in dem Zwischenberelch des Lichtweges beugt.

6. Optische Abtastvorrichtung nach Anspruch 1 oder 2, wobei die Lichtsteuereinrichtung (100) das Licht in dem Zwischenbereich des Lichtweges absorbiert.

7. Optische Abtastvorrlchtung nach Anspruch 1 oder 2, wobei die Lichtsteuereinrichtung (100) das Licht in dem Zwischenbereich des Lichtweges reflektiert.

8. Optische Abtastvorrichtung nach Anspruch 1 oder 2, wobei die Lichtsteuereinrichtung (100) das Licht in dem Zwischenbereich des Lichtweges in einer für die Fokuszone Irrelevanten Richtung durchlässt.

9. Optische Abtastvorrichtung nach Anspruch 1 oder 2, wobei die Lichtsteuereinrichtung (100) das Licht in dem Zwischenbereich des Lichtweges in einer Richtung von der Fokuszone weg bricht.

10. Optische Abtastvorrichtung nach Anspruch 1, wobei die Lichtsteuereinrichtung (100) einen vorgegebenen Bereich aufweist, der verhindert, dass Licht in einem axialen Zwischenbereich des Lichtweges in die Fokuszone gelangt, wobei der vorgegebene Bereich einen Außendurchmesser hat, der kleiner ist als der wirksame Durchmesser der Linse.

11. Optische Abtastvorrichtung nach Anspruch 1, wobei die Lichtsteuereinrichtung ein Lichtsteuerfilm (101) einer vorgegebenen Struktur ist, der sich auf der Objektivlinse (200) befindet.

12. Optische Abtastvorrichtung nach Anspruch 1, wobei die Lichtsteuereinrichtung ein transparentes Element (100) enthält.

13. Optische Abtastvorrichtung nach Anspruch 12, wobei das transparente Element (100) um eine vorgegebene Strecke von der Objektivlinse (200) beabstandet ist.

14. Optische Abtastvorrichtung nach Anspruch 12, wobei das transparente Element (100) wenigstens einen Lichtsteuerfilm einer vorgegebenen Struktur enthält.

15. Optische Abtastvorrichtung nach Anspruch 1, wobei dle Lichtsteuereinrichtung wenigstens einen Lichtsteuerfilm (101) einer vorgegebenen Struktur enthält, der sich auf der Objektivlinse (200) befindet.

16. Optische Abtastvorrichtung nach Anspruch 1, wobei die Lichtsteuereinrichtung wenigstens eine Oberflächenunebenheit (102) einer vorgegebenen Struktur enthält.

17. Optische Abtastvorrichtung nach Anspruch 16, wobei die Oberflächenunebenheit (102) eine Nut enthält, die eine Seitenwand mit einem vorgegebenen Gefälle in Bezug auf eine Achse des Lichtweges aufweist.

18. Optische Abtastvorrichtung nach Anspruch 17, wobei die Nut (102) V-förmig ist.

19. Optische Abtastvorrichtung nach Anspruch 17, wobei die Nut (102) parallele Seiten hat und die Linse (200") eine Flachlinse ist.

20. Optische Abtastvorrichtung nach Anspruch 16, wobei die wenigstens eine Oberflächenunebenheit eine vorstehende keilförmige Rippe (102) enthält.

**21.** Optische Abtastvorrichtung nach Anspruch 16, wobei die wenigstens eine Oberflächenunebenheit eine aufgeraute Oberfläche enthält.

**22.** Optische Abtastvorrichtung nach Anspruch 16, wobei die Oberflächenunebenheit ein Beugungsgitter enthält, das das Licht in dem Zwischenbereich des Lichtweges von der Fokuszone weg beugt.

**23.** Optische Abtastvorrichtung nach Anspruch 1, wobei die Linse (200) eine brechende Fläche hat.

**24.** Optische Abtastvorrichtung nach Anspruch 1, wobel die Linse (200) eine Beugungslinse ist.

**25.** Optische Abtastvorrichtung nach Anspruch 1, wobei die Linse (200) eine Planllnse ist.

**26.** Optische Abtastvorrichtung nach Anspruch 2, wobei der Fotodetektor (800) einen ersten Lichtempfangsabschnitt, der nur Licht in dem Achsen-Nahbereich empfängt, das von einer relativ dickeren Platte reflektiert wird, und einen zweiten Lichtempfangsbereich enthält, der den ersten Lichtempfangsbereich umgibt, wobei der erste und der zweite Lichtempfangsbereich Licht sowohl in dem Achsen-Nah- als auch dem Fernbereich empfangen, das von einer relativ dünnen Platte reflektiert wird.

**27.** Optische Abtastvorrichtung nach Anspruch 26, wobei der erste und der zweite Lichtempfangsbereich des Fotodetektors (800) Segmente enthalten, die in Quadranten untertellt sind.

**28.** Optische Abtastvorrichtung nach Anspruch 16, wobei die wenigstens eine Oberflächenunebenheit einer vorgegebenen Struktur auf wenigstens einer Fläche der Linse (200) ausgeblldet ist.

**29.** Optische Abtastvorrichtung nach Anspruch 1, wobei der axiale Zwischenbereich durch eine Plattendicke bestimmt wird.

**30.** Optische Abtastvorrichtung nach Anspruch 1, wobei die Platte (300) vom Typ DVD oder CD ist.

**31.** Optische Abtastvorrichtung nach Anspruch 1, wobei die Platte (300) eine Dicke von 0,6±0.1 mm oder 1,2±0.1 mm hat.

**32.** Optische Abtastvorrichtung nach Anspruch 1, wobei die Platte (300) aus Glas oder Kunststoff besteht.

**33.** Optische Abtastlinsenvorrichtung nach Anspruch 2, wobel der axiale Nah- und Fembereich durch den Betrag der optischen Aberration bestimmt werden.

**34.** Optische Abtastvorrichtung nach Anspruch 2, wobei die Platte (300) von dem Typ ist, der eine unterschiedliche Dicke hat.

**Revendications**

**1.** Dispositif de lecture optique pour lire des informations depuis des disques optiques, et enregistrer des informations sur des disques optiques ayant des épaisseurs différentes, comportant :

une source lumineuse (900),
un objectif (200) disposé le long d'un trajet lumineux depuis ladite source lumineuse (900) projetant une lumière sur un disque (300), ledit objectif (200) for calisant une lumière sur une zone focale et ayant un diamètre efficace prédéterminé, et
des moyens de commande de lumière (100) disposés dans le trajet lumineux de ladite lentille pour empêcher qu'une lumière dans une zone axiale intermédiaire dudit trajet lumineux n'atteigne ladite zone focale, ladite région axiale intermédiaire étant située entre une région axiale proche qui inclut le centre dudit trajet lumineux et une région axiale éloignée située radialement vers l'extérieur de ladite région intermédiaire, lesdits moyens de commande de lumière permettant à une lumière dans lesdites régions proche et éloignée dudit trajet lumineux d'atteindre ladite zone focale dans des points focaux respectifs.

**2.** Dispositif de lecture optique selon la revendication 1, comportant de plus :

un diviseur de faisceau (600) disposé entre lesdits moyens de commande de lumière (100) et ladite source lumineuse (900), et
un photodétecteur (800) pour détecter la lumière réfléchie par ledit disque (300) travers ledit diviseur de faisceau (600).

**3.** Dispositif de lecture optique selon la revendication 1 ou 2, dans lequel lesdits moyens de commande de lumière (100) bloquent la lumière dans la région intermédiaire du trajet lumineux.

**4.** Dispositif de lecture optique selon la revendication 1 ou 2, dans lequel lesdits moyens de commande de lumière (100) diffusent la lumière dans la région intermédiaire dudit trajet lumineux.

**5.** Dispositif de lecture optique selon la revendication 1 ou 2, dans lequel lesdits moyens de commande de lumière (100) diffractent la lumière dans la région intermédiaire dudit trajet lumineux.

**6.** Dispositif de lecture optique selon la revendication 1 ou 2, dans lequel lesdits moyens de commande de lumière (100) absorbent la lumière dans la région intermédiaire dudit trajet lumineux.

**7.** Dispositif de lecture optique selon la revendication 1 ou 2, dans lequel lesdits moyens de commande de lumière (100) réfléchissent la lumière dans la région intermédiaire dudit trajet lumineux.

**8.** Dispositif de lecture optique selon la revendication 1 ou 2, dans lequel lesdits moyens de commande de lumière (100) transmettent la lumière dans la région intermédiaire dudit trajet lumineux dans une direction indépendante de ladite zone focale.

**9.** Dispositif de lecture optique selon la revendication 1 ou 2, dans lequel lesdits moyens de commande de lumière (100) réfractent la lumière dans la région intermédiaire dudit trajet lumineux dans une direction s'éloignant de ladite zone focale.

**10.** Dispositif de lecture optique selon la revendication 1, dans lequel lesdits moyens de commande de lumière (100) ont une région prédéterminée pour empêcher qu'une lumière dans une région axiale intermédiaire dudit trajet lumineux n'atteigne ladite zone focale, ladite région prédéterminée ayant un diamètre extérieur plus petit que le diamètre efficace de ladite lentille.

**11.** Dispositif de lecture optique selon la revendication 1, dans lequel lesdits moyens de commande de lumière sont un film de commande de lumière (101) ayant un motif prédéterminé situé sur ledit objectif (200).

**12.** Dispositif de lecture optique selon la revendication 1, dans lequel lesdits moyens de commande de lumière comportent un élément transparent (100).

**13.** Dispositif de lecture optique selon la revendication 12, dans lequel ledit élément transparent (100) est espacé dudit objectif (200) d'une distance prédéterminée.

**14.** Dispositif de lecture optique selon la revendication 12, dans lequel ledit élément transparent (100) comporte au moins un film de commande de lumière ayant un motif prédéterminé.

**15.** Dispositif de lecture optique selon la revendication 1, dans lequel lesdits moyens de commande de lumière comportent au moins un film de commande de lumière (101) ayant un motif prédéterminé situé sur ledit objectif (200).

**16.** Dispositif de lecture optique selon la revendication 11, dans lequel lesdits moyens de commande de lumière comportent au moins une irrégularité de surface (102) ayant un motif prédéterminé.

**17.** Dispositif de lecture optique selon la revendication 16, dans lequel ladite irrégularité de surface (102) comporte une gorge ayant une paroi latérale d'une pente prédéterminée par rapport à un axe dudit trajet lumineux.

**18.** Dispositif de lecture optique selon la revendication 17, dans lequel ladite gorge (102) est en forme de V.

**19.** Dispositif de lecture optique selon la revendication 17, dans lequel ladite gorge (102) a des côtés parallèles et ladite lentille (200") est une lentille plate.

**20.** Dispositif de lecture optique selon la revendication 16, dans lequel ladite au moins une irrégularité de surface comporte une nervure en forme de coin en saillie (102).

**21.** Dispositif de lecture optique selon la revendication 16, dans lequel ladite au moins une irrégularité de surface comporte une surface rugueuse.

**22.** Dispositif de lecture optique selon la revendication 16, dans lequel ladite irrégularité de surface comporte un réseau de diffraction pour diffracter la lumière dans ladite région intermédiaire dudit trajet lumineux à l'écart de ladite zone focale.

**23.** Dispositif de lecture optique selon la revendication 1, dans lequel ladite lentille (200) a une surface de réfraction.

**24.** Dispositif de lecture optique selon la revendication 1, dans lequel ladite lentille (200) est une lentille de diffraction.

**25.** Dispositif de lecture optique selon la revendication 1, dans lequel ladite lentille (200) est une lentille plane.

**26.** Dispositif de lecture optique selon la revendication 2, dans lequel ledit photodétecteur (800) comporte une première région de réception de lumière pour recevoir uniquement une lumière dans ladite région d'axe proche réfléchie par un disque relativement plus épais, une seconde région de réception de lumière entourant ladite première région de réception de lumière, lesdites première et seconde régions de réception de lumière recevant une lumière dans les deux régions axiales proche et éloignée réfléchie par un disque relativement mince.

**27.** Dispositif de lecture optique selon la revendication 26, dans lequel chacune desdites première et seconde régions de réception de lumière dudit photodétecteur (800) comporte des segments partitionnés en quadrants.

28. Dispositif de lecture optique selon la revendication 16, dans lequel ladite au moins une irrégularité de surface ayant un motif prédéterminé est formée sur au moins une surface de ladits lentille (200).

29. Dispositif de lecture optique selon la revendication 1, dans lequel ladite région axiale intermédiaire est définie par une épaisseur de disque.

30. Dispositif de lecture optique selon la revendication 1, dans lequel ledit disque (300) est du type DVD ou CD.

31. Dispositif de lecture optique selon la revendication 1, dans lequel ledit disque (300) a une épaisseur de $0,6 \pm 0,1$ mm ou de $1,2 \pm 0,1$ mm.

32. Dispositif de lecture optique selon la revendication 1, dans lequel ledit disque (300) est constitué de verre ou d'une matière plastique.

33. Dispositif de lecture optique selon la revendication 2, dans lequel lesdites régions axiales proche et éloignée sont définies par la quantité d'aberration optique.

34. Dispositif de lecture optique selon la revendication 2, dans lequel ledit disque (300) est du type ayant une épaisseur différente.

# FIG. 1

# FIG. 2

# FIG. 3

FIG. 4

FIG. 5

# FIG. 6A

# FIG. 6B

# FIG. 7A

## FIG.7B

## FIG.7C

# FIG. 8

# FIG. 9

# FIG.10A

200

101  101

# FIG.11

101'  200

# FIG.10B

300

200

102'

102

# FIG. 12A

# FIG. 12B

—300

—200'

—102

400

—300

—102'

—200'

400

# FIG. 13

200'

—102

FIG. 14A

200'

102'

FIG. 14B

200'

401

θ

102'

402

FIG. 16

200'

102'

FIG. 15A

1001

1002a 103a

FIG. 15B

1002

103a

FIG. 15C

1001

K

1002b 103b

FIG. 15D

1002

103b

FIG. 15E  FIG. 15F  FIG. 15G

FIG. 15H  FIG. 15I

FIG. 15J

FIG. 15K

# FIG. 17

# FIG. 18

FIG. 19

FIG. 20

EP 0 806 039 B1

# FIG. 21

902a

903a

901a

800

# FIG. 22

902b
901b
800

# FIG. 23

810

A2

A1

B2  B1  D1  D2

C1

811
812

C2

# FIG. 24

810

# FIG. 25

810

901b

902b

# FIG. 26

810

902b

# FIG. 27

810

901b

902b

# FIG. 28

810

901b

902b

FIG. 29

810

901b

902b

FIG. 30

F
o
c
u
s

E
r
r
o
r

S
i
g
n
a
l

B

A

FOCUS OFFSET AMOUNT

# FIG. 31

# FIG. 32

# FIG. 33

# FIG. 34

# FIG. 35

# FIG. 36

INPUT

OUTPUT